# EUROPEAN PATENT APPLICATION

(11) **EP 1 213 643 A1**
(43) Date of publication of application: **12.06.2002**
(21) Application number: 00310780.2
(22) Date of filing: 05.12.2000
(51) Int. Cl.: G06F 3/023, H04M 1/2745

(54) **Intelligent dictionary input method**

(71) Applicant: Inventec Appliances Corp., Wugu Shiang, Taipei (TW)
(72) Inventor: Liu, Ying, Development District, Shanghai (CN); Ho, David, Wugu Shiang, Tapei (TW); Tsai, Tony, Wugu Shiang, Tapei (TW)
(74) Representative: Want, Clifford James

(57) **Abstract**

An intelligent dictionary input method used on a standard keypad device of the International Telegraph and Telephone Consultative Committee (CCITT) for realizing the input of bilingual dictionaries and European letters and implementing intelligent dictionary character input by searching and predicting according to the currently entered characters and the dictionary data. The method comprises the following steps: first, key messages are received from a CCITT keypad. When the pressed keys are the number keys [2] through [9], the keys are then converted into the corresponding letters and numbers according to the CCITT keypad mapping rules. When a letter is entered, the system performs searching in the dictionary database according to the searching range of the converted letters. The searching result is then displayed, completing the process of letter input.

## Description

### BACKGROUND OF THE INVENTION

### Field of Invention

The present invention relates to a method of implementing European letter input through the combination with dictionary data and, more particularly, to intelligent dictionary letter input using a CCITT standard keypad device. Through the simplest method and the least times of key pressing, the invention can complete letter input within the shortest time.

### Related Art

Due to recent development in the economy and the society, the pace of human life and works become faster than ever. Therefore, the communication industry thrives rapidly, which modifies people's concept toward communications. The communication methods have been evolving from the traditional fixed communication style toward more efficient and high technology oriented mobile style. Various portable or mobile communication apparatuses have been introduced to the market and brought great convenience to people's lives. In particular, the mobile phone is featured in portability and simple operations. In recent years, mobile phones occupy a great percentage in uses, showing its tremendous market power.

In daily works, dictionaries are indispensable searching tools. Particularly when going abroad for business activities and training, people often bring along a thick dictionary for references. Similarly, mobile phones as an important communication tool is a must too. However, bringing two separate things is very inconvenient for a user and causes resource waste especially when it is possible for them to be combined together. Therefore, adding the dictionary function to the mobile phone and combining with the personal digital assistant (PDA) function to manage life, including phone cards, schedules, notebooks and the calculator, are highly desirable. This enables the user to carry only one mobile phone to enjoy the many functions of the PDA.

Nonetheless, mobile phones have a special keypad. Due to the limitation of portability, the keypad of the mobile phone still uses the standard keypad interface introduced by the International Telegraph and Telephone Consultative Committee (CCITT), namely, the 12 keys of 0 through 9, '*', and '#' and several other control and/or function keys. Except for pure telephone number entering, they are not so convenient for accomplishing appended functions, in particular, when entering European letters. For example, if one wants to look up the English word "international" in a bilingual dictionary, he only needs to press 13 keys to complete the input. This job becomes extremely difficult on a mobile phone. One has to press [4] three time to get an 'i', two times to get an 'n', and so on until 'l' is entered. He has to go through all this to finish the input of the whole word "international". So the user would have totally pressed [2] for two times, [3] for two times, [4] for six times, [5] for three times, [6] for nine times, [7] for three times and [8] for two times, totally 27 key strikes. Thus, no one would like to go through such a complicated input process only to look for an English word. This increases the difficulty in adding the dictionary function to the mobile phone.

It is the objective of the invention to enable the user to use the mobile phone keypad to enter anything as conveniently as using a PC keyboard. How to solve the above problem by providing a simpler and faster method with fewer key strikes, making dictionary searching more intelligent, and simplifying the PDA function key input is the original motive of the invention.

### SUMMARY OF THE INVENTION

The present invention implements a bilingual dictionary on a mobile phone by using a CCITT standard keypad to enter letters and by searching and predicting according to the currently entered letters along with the dictionary data. The invention achieves the goal of intelligent dictionary letter input, whereby one can decrease the number of key strikes and have convenient and fast input.

The invention has the following features:
1. Fuzzy input: one does not need to specify the actual key value for the key pressed;
2. After pressing n keys, a list of all possible letter combinations is presented for selection;
3. There is a certain predictability in the input. Adding '...' to a letter combination means that a key value can be entered to form other words;
4. One only needs to type in the prefix of a word to enter the dictionary key word list for selecting the input;
5. One can select the word from the dictionary key word list screen; and
6. One can select the transformation of a word from the dictionary key word list screen.

### BRIEF DESCRIPTION OF THE DRAWINGS

The present invention will become more fully understood from the detailed description given hereinbelow illustration only, and thus are not limitative of the present invention, and wherein:
FIG. 1 shows a keypad distribution and intelligent dictionary input interface distribution of a conventional mobile phone;
FIG. 2 shows the software structure of the invention;
FIG. 3 is a software flowchart of the disclosed intelligent dictionary input method;
FIG. 4 is a flowchart of the matching module of the invention;
FIG. 5 is a flowchart of the searching module of the invention;
FIG. 6 is a schematic view showing an initial key word list in the English-Chinese dictionary;
FIG. 7 is a schematic view of an input screen according to the first embodiment, showing the result after entering the first letter;
FIG. 8 is a schematic view of an input screen according to the first embodiment, showing the result after entering the second letter;
FIG. 9 is a schematic view of an input screen according to the first embodiment, showing the result after entering the first letter and pressing the page-flipping key;
FIG. 10 is a schematic view of an input screen according to the first embodiment, showing the result after entering the third letter;
FIG. 11 is a schematic view of an input screen according to the first embodiment, showing the result after entering the eighth letter;
FIG. 12 is a schematic view of an input screen according to the first embodiment, showing the related key word list screen after pressing the OK key;
FIG. 13 is a schematic view of an input screen according to the first embodiment, showing the related key word list screen after pressing the DOWN key twice;
FIG. 14 is a schematic view of an input screen according to the second embodiment, showing the result after entering the first letter;
FIG. 15 is a schematic view of an input screen according to the second embodiment, showing the result after entering the fourth letter;
FIG. 16 is a schematic view of an input screen according to the second embodiment, showing the related key word list screen after pressing the DOWN key twice;
FIG. 17 is a schematic view of an input screen according to the second embodiment, showing the related key word list screen after pressing the OK key;
FIG. 18 is a schematic view of an input screen according to the second embodiment, showing the related key word list screen after pressing the DOWN key once;
FIG. 19 is a schematic view of an input screen according to the second embodiment, showing the related key word transformation list screen after pressing the TRANSFORMATION key; and
FIG. 20 is a schematic view of an input screen according to the second embodiment, showing the related key word transformation list screen after pressing the DOWN key once.

### DETAILED DESCRIPTION OF THE INVENTION

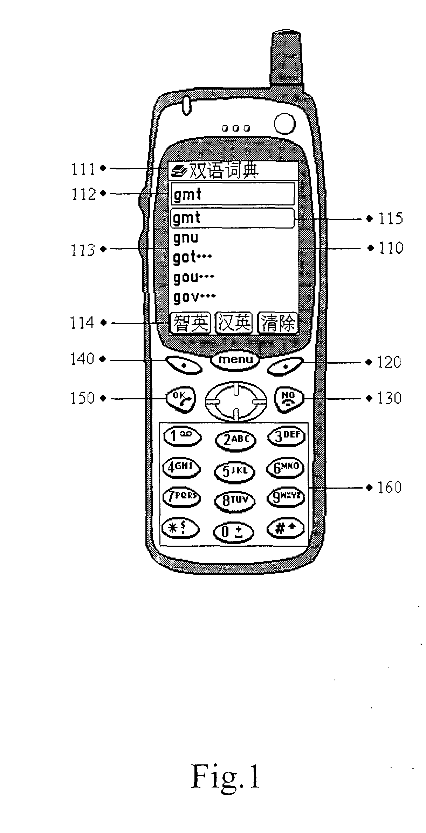

Referring to FIG. 1, the conventional mobile phone contains a liquid crystal display (LCD) 110, a right soft key 120, an ESC key 130, a left soft key 140, an OK key 150, a CCITT standard keypad 160. The LCD 110 further includes a function title area 111, an input display area 112, an input selection area 113, a key function area 114 and a highlight bar 115.

Before describing the technical contents and embodiments of the invention, we first explain the following notations to be used herein.
1. Any CCITT standard key on the mobile phone is enclosed by square brackets [].
2. The letter key value of any key is enclosed by quotation marks"".
3. The star * represents a wild letter combination of any length.
4. X_{[1]},X_{[2]}...X_{[n]} represent the letter key value of the key being pressed one, two... n times, respectively; and X_{[n+1]} represents the key value of the key being pressed right now.
5. Y_{[1]}, Y_{[2]}...Y_{[n]} represent the letter combination produced by the first n keys.

### Stage One:

One needs to first establish a complete bilingual dictionary system that contains a bilingual dictionary database and a dictionary search engine.

The bilingual dictionary database at least contains an English-Chinese dictionary database, an English vocabulary variation database, a Chinese-English dictionary database, a data decompressing table and a key word index. The key word index uses the first two letters of the keywords to build up the relation between dictionary item numbers and the key word. Before this, one has to sort the dictionary data according to the key word. Building up the key word index narrows the vocabulary search range and speeds up the searches.

The dictionary search engine is comprised of a data decompressing program, a data search program, and a format conversion program. When a letter string is entered, the engine starts the data search program to look for data in the dictionary. Through the data decompressing program and the format conversion program, the dictionary data found is output as the search result.

### Stage Two:

Since each of the keys [2] through [9] on the mobile phone represents 3 to 4 letters, there inevitably has the over coding and one-to-multiple phenomena. Therefore, one has to go through a tedious key-in process in order to enter a single word.

Using the intelligent dictionary input method disclosed herein enables one to use the simplest method to enter a word with the least keys and within the shortest time.

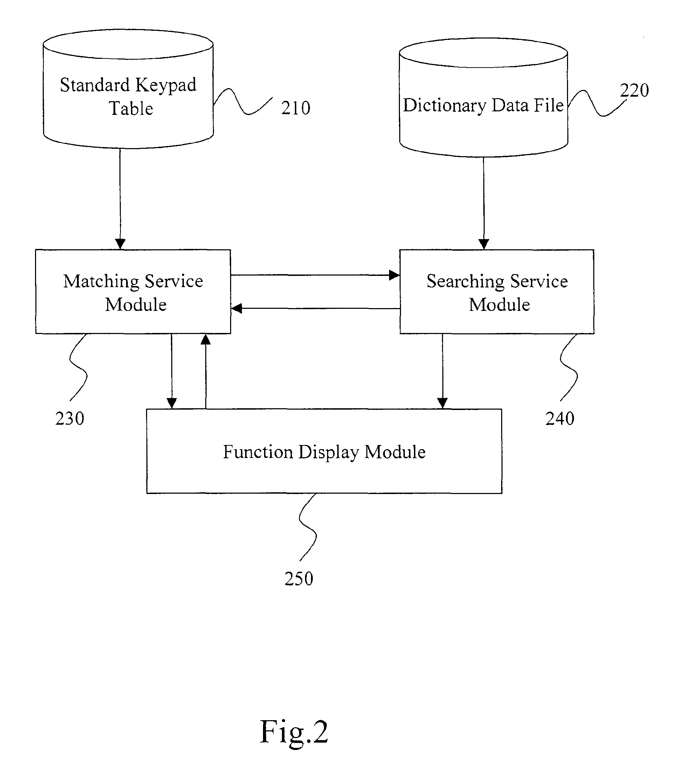

Once the bilingual dictionary system has been set up, one can then start to use the intelligent dictionary input method. The procedure is shown in FIGS. 2 through 6. With reference to FIG. 2, the software structure includes a standard keypad table 210, a dictionary data file 220, a matching service module 230, a searching service module 240 and a function display module 250.

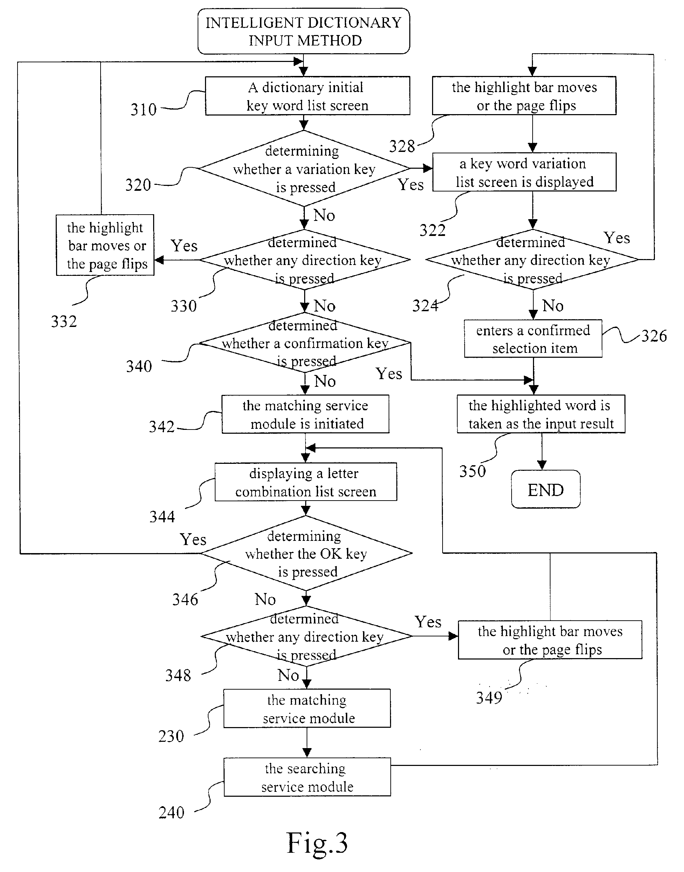

With reference to FIG. 3, the flowchart contains the following steps:
A dictionary initial key word list screen is first display in the LCD input selection area (step 310). The highlight bar rests on the first key word. The user can use UP or DOWN direction keys to move the highlight bar or use LEFT or RIGHT direction keys to flip pages and select words or phrases as an input word. IN particular, detailed steps include determining whether a variation key is pressed (step 320). If not, then it is determined whether any direction key is pressed (step 330). If not, then it is determined whether a confirmation key is pressed (step 340). After confirmation, the highlighted word is taken as the input result (step 350).

In step 320, when one selects to press the variation key, a key word variation list screen is displayed (step 322). It is then determined whether any direction key is pressed (step 324). If not, then one enters a confirmed selection item (step 326) and the highlighted item is taken as the input result (step 350). If the user presses a direction key, then the highlight bar moves or the page flips (step 328) followed by executing step 322.

In step 330, when one direction key is pressed, then the highlight bar moves or the page flips (step 332) and the procedure returns step 310.

In step 340, if there is no confirmed selection item, then the matching service module is initiated (step 342), followed by displaying a letter combination list screen (step 344) and determining whether the OK key is pressed (step 346). If a selection item is confirmed, the procedure returns to step 310. Otherwise, it is further determined whether any direction key is pressed (step 348). If the direction key is pressed, then the highlight bar moves or the page flips (step 349). Otherwise, the matching service module 230 and the searching service module 240 are initiated.

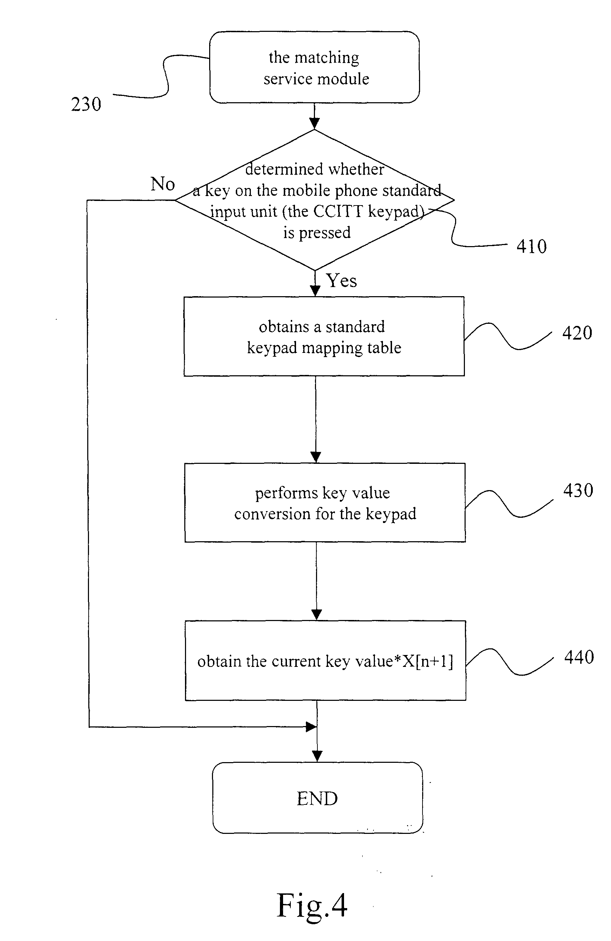

With reference to FIG. 4, after starting the matching service module (step 230), it is determined whether a key on the mobile phone standard input unit (the CCITT keypad) is pressed (step 410). Step 420 obtains a standard keypad mapping table. Step 430 performs key value conversion for the keypad to obtain the current key value *X_{[n+1]} (step 440) and to list it in the input selection area. One can also use the UP, DOWN, LEFT, and RIGHT direction keys to select letter combinations.

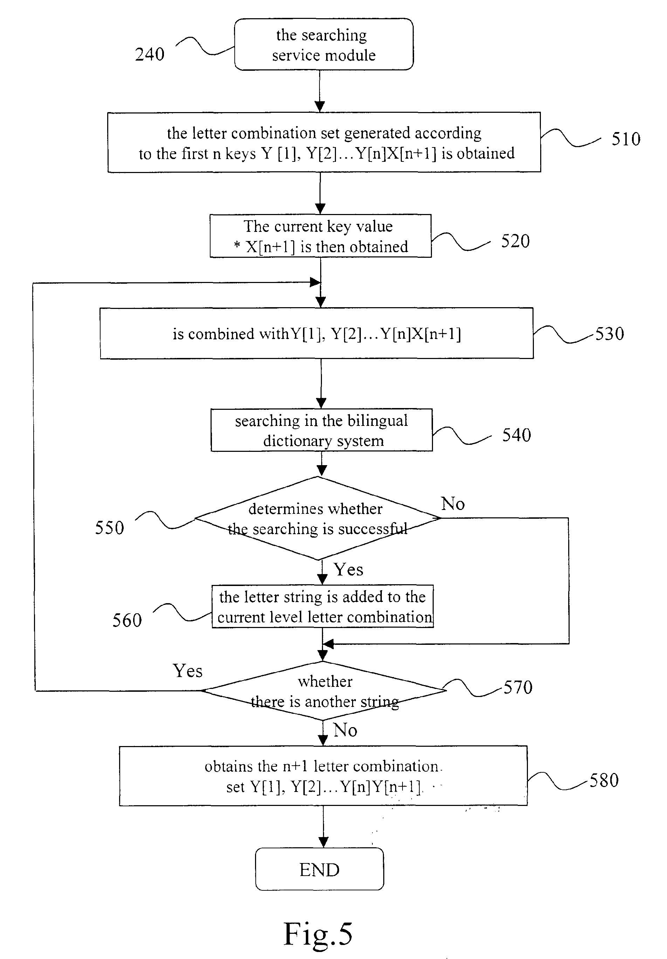

With reference to FIG. 5, after starting the searching service module, the letter combination set generated according to the first n keys Y_{[1]}, Y_{[2]}...Y_{[n]} is obtained (step 510). The current key value *X_{[n+1]} is then obtained through the matching service module (step 520) and is combined with Y_{[1]}, Y_{[2]}...Y_{[n]} to form the set Y_{[1]}, Y_{[2]}...Y_{[n]}X_{[n+1]} (step 530). Each letter string in the set Y_{[1]}, Y_{[2]}...Y_{[n]}X_{[n+1]} is extracted for searching in the bilingual dictionary system (step 540). Step 550 determines whether the searching is successful. If a letter string is found in the dictionary, then the letter string is taken as one of the letter combination in this search and is added to the current level letter combination (step 560). Step 570 further provides the selection of whether there is another string and makes a tag to indicate whether more letters can be entered to form a longer word. Finally, step 580 obtains the n+1 letter combination set Y_{[1]}, Y_{[2]}...Y_{[n]}Y_{[n+1]} and they are listed in the input selection area for the user to select. In particular, the strings followed by "..." indicate that the user can enter more letters to form longer words, processing certain predictability.

In the letter combination list screen, the user can press ESC key to cancel the current key if he hits a wrong key or wishes to back one letter. The searching service module then displays the previous letter combination set Y_{[1]},Y_{[2]}...Y_{[n-1]} in the input selection area for the user to select.

In the dictionary key word list screen, the user can press the [VARIATION] key to enter the vocabulary variation list screen and use direction keys to select a specific variation as the input result.

Through the above intelligent dictionary input method, the user can readily enter letters. Since the input method contains a certain predictability, which greatly simplifies the input process.

It should be emphasized that the English database can be replaced by databases of other languages, such as French and German (European languages). The input process of intelligent dictionary input method is further explained using the following two examples.

Embodiment 1: The user needs to enter the English word "international".

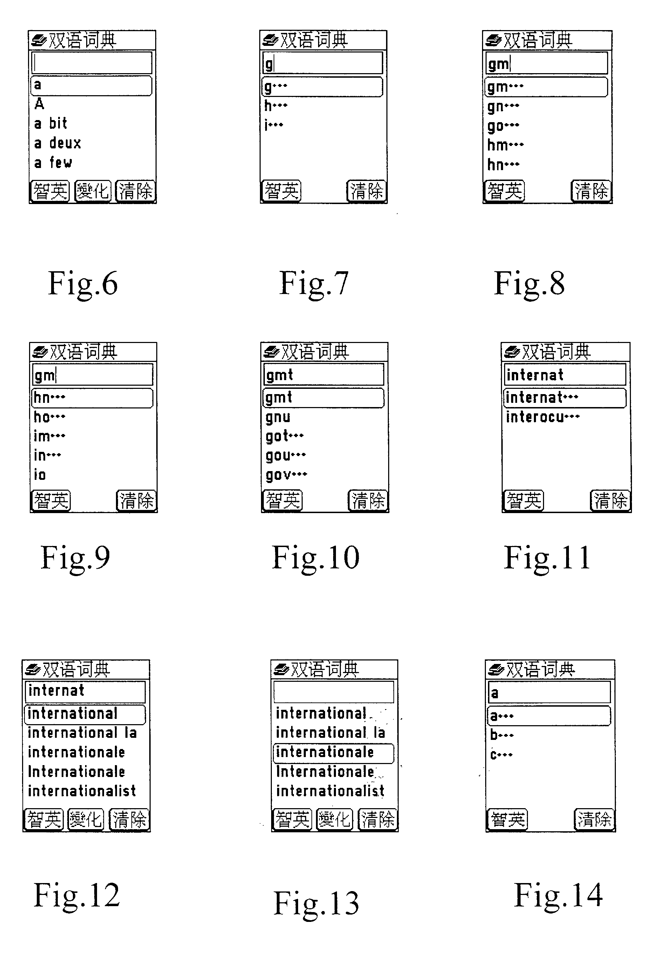

First, the dictionary initial key word list screen is displayed as in FIG. 6. AT the moment, the user has not entered any letter. The LCD input selection area displays the dictionary initial key words. The highlight bar is on the first key word to wait for the user's input. The user can perform input through the CCITT keypad that corresponds to the one shown in the screen.

Suppose the user strikes the first key [4], the matching service module gives three fuzzy key values 'g', 'h', and 'i'. So the system obtains the initial letter combination set {"g", "h", "i"}, which is made into a list shown in the LCD input selection area, with the "g" highlighted (FIG. 7).

Secondly, the user presses the second key [6], the matching service module gives three value key values 'm', 'n', and 'o', which are combined with the initial letter combination set {"g", "h", "i"} to generate the series "gm", "gn", "go", "hm"... "io". Through the dictionary searching by the searching service module, the second level letter combination set {"gm", "gn", "go", "hm", "hn", "ho", "im", "in", "io"} is displayed in the LCD selection area (FIG. 8). Due to the size of the LCD, the screen cannot display all letter combinations. The user can use the DOWN direction key to flip the page to show other letter combinations (FIG. 9).

The user then presses the third key [8]. The searching service module gets the previous level letter combination set to combine with the key values 't', 'u', and 'v' generated this time, obtaining the third level letter combination set to be displayed in the LCD input selection area (FIG. 10).

If the user presses the [Left soft key], this action will be interpreted as a clear key. The previous level letter combination set is then retrieved. The screen is back to the state after pressing the second key, as shown in FIG. 8.

After the user presses the keys [3], [7], [6], [2], and [8] in series, the letter combination set becomes {"internat", "interocu"} (FIG. 11), with the highlight bar resting on the letter combination "internat".

The user can choose to keep entering other letters. Yet a simpler choice is for him to press the [OK] key to initiate the searching service module to search the words corresponding to "internat" in the dictionary and to display them on the corresponding dictionary key word list screen (FIG. 12). In this example, the highlight bar is on the word "international". So the key word list starts the list from this highlighted word. After pressing the [OK] key, the user then finishes entering the word.

If the user actually wants to enter the word "internationale", he only needs to press the DOWN key two times to move the highlight bar to the correct word (FIG. 13).

In the embodiment, the user only needs to strike 10 keys to get the word "international" using the intelligent dictionary input method.

It would become very complicated if using the mobile phone standard input method. The user has to press [4] three times to get an 'i', [6] two times to get an 'n', and so on, until 'l' is entered. So the user has to press [2] twice, [3] twice, [4] six times, [5] three times, [6] nine times, [7] three times, and [8] twice, totally 27 key strikes.

Embodiment 2: The user needs to enter the phrase "book club" and the word "booking".

The dictionary initial key word list screen is first shown as in FIG. 6.

After the user presses the first key [2], the matching service module gives three fuzzy values 'a', 'b', and 'c' and thus an initial letter combination set {"a", "b", "c"}. This combination set is made into a list shown in the LCD input selection area, with the highlight bar resting on "a" (FIG. 14).

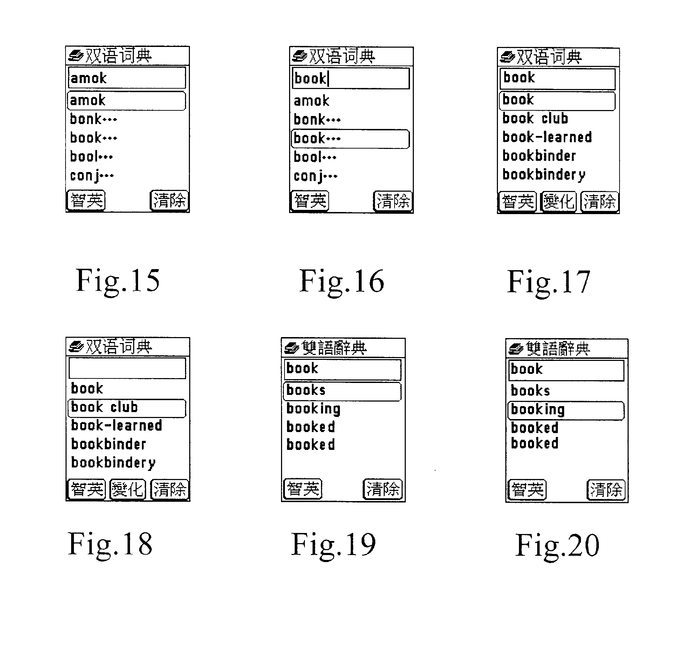

After the user presses the keys [6], [6], and [5], he obtains the letter combination set {"amok", "bonk", "book", "bool". "conj"...} (FIG. 15), with the highlight bar resting on "amok".

The user can press the DOWN key twice to highlight "book" (FIG. 16). He can then continue to press the [OK] key to start the searching service module to find out all the words corresponding to "book" in the dictionary. The corresponding dictionary key word list screen is displayed with "book" highlighted (FIG. 17).

To enter "book club", the user only needs to press the DOWN key once in the corresponding dictionary key word list screen (FIG. 18). To enter the variation "booking" of the word "book", the user needs to press the [VARIATION] key in FIG. 17 to start the bilingual dictionary system to search for the variations of "book". The variations are then listed in the LCD input selection area, with the highlight bar resting on the first item in the corresponding "book" variation list screen (FIG. 19). The user then presses the DOWN key once in the key word variation list screen to highlight "booking". The input in finished by pressing the [OK] key (FIG. 20).

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. An intelligent dictionary input method using a device with a CCITT standard keypad to enter letters, the method comprising the steps of:
receiving key messages from the standard keypad;
obtaining a mapping table of the standard keypad;
converting the keys in order according to the mapping table into the corresponding letters and numbers;
setting a searching range according to the letter and number and searching a dictionary database thereby; and
displaying a searching result.

2. The method of claim 1 further comprising the step of establishing a complete bilingual dictionary system.

3. The method of claim 2, wherein the bilingual dictionary system comprises a bilingual dictionary database and a dictionary searching engine.

4. The method of claim 3, wherein the bilingual dictionary database comprises an English-Chinese dictionary database, an English vocabulary variation database, a Chinese-English dictionary database, a data decompressing table and a key word index.

5. The method of claim 4, wherein the English database can be replaced by other suitable language database such as a European language database.

6. The method of claim 4, wherein the dictionary data are sorted by the length and alphabetic order of the keyword.

7. The method of claim 3, wherein the dictionary searching engine includes a data decompressing program, a data searching program and a format conversion program.

8. The method of claim 1, wherein the key message has the function of fuzzy input.

9. The method of claim 8, wherein the fuzzy input function is achieved by making a list of possible letter combinations of the keys pressed for the user to select.
